(19) **Europäisches Patentamt European Patent Office Office européen des brevets**

(11) **EP 1 543 088 B1**

(12) **FASCICULE DE BREVET EUROPEEN**

(45) Date de publication et mention de la délivrance du brevet:
**07.11.2007 Bulletin 2007/45**

(51) Int Cl.:
*C09J 11/06* (2006.01)     *C09J 161/30* (2006.01)
*D21H 21/16* (2006.01)     *D21H 27/00* (2006.01)
*B32B 21/00* (2006.01)     *B27N 3/00* (2006.01)
*C09J 161/00* (2006.01)     *C09J 161/10* (2006.01)

(21) Numéro de dépôt: 03773781.4

(22) Date de dépôt: **15.09.2003**

(86) Numéro de dépôt international:
**PCT/FR2003/002716**

(87) Numéro de publication internationale:
**WO 2004/029170 (08.04.2004 Gazette 2004/15)**

(54) **NOUVEAUX ADHESIFS RENFERMANT DES DIACETALS**

NEUE KLEBEMITTEL, DIE DIACETALE ENTHALTEN

NOVEL ADHESIVES COMPRISING DIACETALS

(84) Etats contractants désignés:
**AT BE BG CH CY CZ DE DK EE ES FI FR GB GR HU IE IT LI LU MC NL PT RO SE SI SK TR**

(30) Priorité: **25.09.2002 FR 0211845**
**09.07.2003 FR 0308393**

(43) Date de publication de la demande:
**22.06.2005 Bulletin 2005/25**

(73) Titulaire: **Clariant Specialty Fine Chemicals (France)**
**92800 Puteaux (FR)**

(72) Inventeurs:
• **PIZZI, Antonio**
**F-88000 Chantraine (FR)**
• **FAUCHER, Philippe**
**F-78170 la Celle Saint Cloud (FR)**
• **ZANETTI, Michela**
**Knoxville, TN 37919 (US)**

(74) Mandataire: **Santarelli**
**14, avenue de la Grande Armée,**
**B.P. 237**
**75822 Paris Cedex 17 (FR)**

(56) Documents cités:
EP-A- 0 100 816     EP-A- 0 140 357
FR-A- 2 566 771     US-A- 3 586 503
US-A- 5 155 170     US-A- 5 219 616

• A. PIZZI, M. ZANETTI: "Structure Effects of Additives in Performance Improvement of Aminoplastic Adhesive Resins" JOURNAL OF APPLIED POLYMER SCIENCE, vol. 89, 5 juillet 2003 (2003-07-05), XP002272082

**Description**

La présente invention concerne de nouveaux adhésifs renfermant des diacétals et leurs utilisations.

On recherche toujours de meilleurs adhésifs, procurant une bonne résistance mécanique au collage.

EP-A-1 174 480 décrit des colles aminoplastes ou phénoplastes renfermant un acétal d'alcool en $C_1$-$C_6$ et leur utilisation dans la fabrication de panneaux de particules de bois. Des exemples sont donnés de deux monoacétals, à savoir le méthylal et l'éthylal.

FR-A-1 576 716 décrit des colles phénoplastes renfermant un acétal d'alcool en $C_1$-$C_8$ utilisées notamment pour la fabrication de matériaux ligneux.

Dans le domaine apparenté des papiers et notamment des produits en papier stratifié (stratifié décoratif, feuille de papier décor), on utilise de nombreuses résines, par exemple des résines mélamine-formaldéhyde, phénol-formaldéhyde, comme décrit dans WO-A-97/00172, ou WO-A-01/45940.

EP-A-1 225 278 décrit un procédé pour imprégner un papier décoratif à l'aide d'une résine mélamine, et des papiers ainsi fabriqués.

Les résines phénoliques sont également bien connues pour leur utilisation dans la préparation des liants pour produits à base de fibres minérales, comme décrit dans EP-A-406498.

Or, la demanderesse vient de découvrir que l'utilisation de certains acétals, de préférence des diacétals, et particulièrement le 1,1,2,2-tétraméthoxyéthane (ci-après TME) procurait aux résines et colles une résistance tout à fait exceptionnelle, tout en étant plus aisé à manipuler industriellement, en raison de ses températures d'ébullition et de point éclair.

C'est pourquoi la présente invention a pour objet une colle caractérisée par le fait qu'elle renferme un diacétal, linéaire ou cyclique, pouvant être préparé à partir de dialdéhydes en $C_2$ - $C_6$ et d'alcools en $C_1$ - $C_{12}$.

Dans la présente demande et dans ce qui suit, le terme "colle" désigne les composés habituellement appelés "colles" ou "résines".

Par "diacétal", on entend les composés pouvant être préparés à partir de dialdéhydes et d'alcools mais aussi les compositions pouvant faire cohabiter des structures de type diacétal, monoacétal et hémiacétal.

Egalement par "diacétal", on entend les composés pouvant être préparés à partir de dialdéhydes et de polyols comme le glycérol ou le penta-érythrol qui conduisent à des composés acétaliques mais aussi à des compositions pouvant faire cohabiter des structures de type diacétal, monoacétal et hémiacétal.

Dans des conditions préférentielles de mise en oeuvre de l'invention, la colle renferme un diacétal, et plus particulièrement le 1,1,2,2-tétraméthoxyéthane.

Les diacétals utilisables dans la présente invention peuvent être préparés à partir d'aldéhydes en $C_2$ - $C_6$ et d'alcools en $C_1$ - $C_{12}$, de préférence à partir d'aldéhydes en $C_2$ - $C_4$ et d'alcools en $C_1$ - $C_8$, et plus particulièrement à partir d'aldéhydes en $C_2$ - $C_3$ et d'alcools en $C_1$ - $C_3$.

A titre d'exemples, les diacétals peuvent être le 1,1,2,2-tétraméthoxyéthane (TME), le 1,1,2,2-tétraéthoxyéthane (TEE), le 1,1,2,2,-tétrapropoxyéthane (TPE), le 1,1,3,3-tétraméthoxypropane (TMP), le 1,1,3,3-tétraéthoxypropane (TEP) et de manière préférentielle le TME.

On peut aussi utiliser dans une colle selon l'invention une combinaison quelconque des acétals mentionnés ci-dessus, par exemple 2 ou 3 acétals, voire 4 ou plus.

Les aldéhydes à partir desquels peuvent être préparés les acétals utilisables selon la présente invention sont par exemple des dialdéhydes comme le glyoxal, le malonaldéhyde, le glutaraldéhyde.

Les alcools à partir desquels peuvent être préparés les acétals utilisables selon la présente invention sont par exemple des monoalcools comme le méthanol, l'éthanol, des diols comme l'éthylèneglycol le diéthylèneglycol, le 1,4-butanediol, le néopentylglycol ou des polyols comme le glycérol ou le penta-érythrol.

Par exemple on considère qu'un diacétal comme le TME peut être préparé à partir du glyoxal et du méthanol.

La colle peut être par exemple une colle aminoplaste, telle que de type urée-résorcinol-formaldéhyde, mélamine-urée-phénol-formaldéhyde, urée-formaldéhyde, de préférence mélamine-formaldéhyde et particulièrement de type mélamine-urée-formaldéhyde.

Elle peut être aussi une colle phénoplaste telle qu'une colle phénol-urée-formaldéhyde et de préférence résorcinol-phénol-formaldéhyde ou phénol-formaldéhyde.

On peut également citer les colles à base de résorcinol telles que les colles tanin-résorcinol-formaldéhyde ou lignine-résorcinol-formaldéhyde.

Dans ce cas, les colles avec formaldéhyde renferment le 1,1,2,2-tétraméthoxyéthane.

On peut également citer les colles aminoplastes, phénoplastes ou résorcinol sans formaldéhyde telles les colles de types urée-diméthoxyéthanal, éthylèneurée-diméthoxyéthanal, dihydroxyéthylèneurée-diméthoxyéthanal, mélamine-diméthoxyéthanal-polyols dont le polyol est par exemple le dipropylène glycol, le glycérol tripropoxylate ou l'alcool polyvinylique, mélamine-urée-diméthoxyéthanal-polyols comme mélamine-diméthoxyéthanal-glycérol ou mélamine-diméthoxyéthanal-dipropylèneglycol-glycéroltriéthoxylate ou encore mélamine-diméthoxyéthanal ou enfin phénol-diméthoxyéthanal, résorcinol-diméthoxyéthanal et phénol-résorcinol-diméthoxyéthanal. Ces colles aminoplastes et phénoplastes sont commercialisées par la société CLARIANT (France) dans sa gamme Highlink®.

Dans ce cas, elles renferment tous les diacétals décrits plus haut.

Dans des conditions préférentielles de mise en oeuvre de l'invention, on utilise une colle aminoplaste avec formaldéhyde ou une colle phénoplaste.

Dans d'autres conditions préférentielles de mise en oeuvre de l'invention :

- dans le cas des colles aminoplastes, celles-ci sont fondées sur un mélange composé azoté / formaldéhyde, de préférence dans les proportions de 1 / 0,2 à 3, notamment 1/1,3 à 1,6, particulièrement 1/1,5 environ.
- dans le cas des colles phénoplastes, celles-ci sont fondées sur un mélange phénols / formaldéhyde, de préférence dans les proportions de 1 / 0,7 à 2,8, notamment 1/1,5 à 1,8, particulièrement 1/1,7 environ.

Les acétals peuvent représenter par exemple pondéralement de 1,7 à 25 % de l'ensemble des constituants de la colle, de préférence de 1,7 à 20 %, notamment de 3 à 18 %, particulièrement de 5,5 à 15 %.

Les résines et colles selon la présente invention contenant des diacétals, particulièrement du TME, sont dotées de remarquables propriétés illustrées ci-après dans la partie expérimentale.

Les diacétals qu'elles contiennent abaissent par exemple la viscosité et l'énergie de surface des résines et colles selon la présente invention, ce qui se traduit notamment par une meilleure capacité d'imprégnation des substrats. En conséquence, notamment on observe une résistance améliorée des collages réalisés. De ce fait, il est possible de diminuer sensiblement les quantités de colle utilisées pour obtenir la même résistance du collage.

Par ailleurs, les résines et colles selon l'invention relâchent peu de formaldéhyde.

De plus, certains acétals ont une température d'ébullition et un point éclair élevés.

Par exemple le TME a une température d'ébullition de 156°C et un point éclair de 50°C, ce qui notamment le distingue des monoacétals inférieurs comme le méthylal, dont la température d'ébullition est de 42,3°C et le point éclair de -18°C. Il est donc considérablement plus facile à utiliser industriellement et à transporter.

En effet, outre le fait qu'il n'est pas toxique, il n'a pas tendance à s'évaporer fortement lors de sa mise en oeuvre. Il convient de rappeler à ce sujet que dans le cadre d'utilisations comme liant pour la fabrication d'agglomérés, les copeaux de bois malaxés sont à une température de 30 à 50°C, souvent 40°C environ, ce qui provoque des pertes importantes des acétals volatils par évaporation lors de la fabrication.

De surcroît, l'addition d'un diacétal permet de stabiliser les résines et colles, notamment de type phénoplaste particulièrement de type phénol-formaldéhyde.

Ces propriétés justifient l'utilisation des résines et colles selon l'invention dans la fabrication de matériaux ligneux: déchets agricoles et bois comme les panneaux de fibres, les panneaux de particules, les panneaux orientés de particules (Oriented Strand Boards ou OSB), les panneaux à fibres à densités moyenne et haute (Medium and High Density Fiberboards ou MDF), et d'autres types de panneaux similaires et contreplaqués.

C'est pourquoi la présente demande a encore pour objet des déchets agricoles et compositions de bois comme les panneaux de fibres, les panneaux de particules, les "Oriented Strand Boards" (OSB), les "Medium and High Density Fiberboards" (MDF), et d'autres types de panneaux similaires et contreplaqués contenant une résine ou colle ci-dessus ou préparés en utilisant une résine ou colle ci-dessus.

La présente demande a aussi pour objet un procédé de fabrication de déchets agricoles et de compositions de bois comme les panneaux de fibres, les panneaux de particules, les "Oriented Strand Boards" (OSB), les "Medium and High Density Fiberboards" (MDF), et d'autres types de panneaux similaires et contreplaqués caractérisé en ce qu'il comprend les étapes de mélange du substrat à lier à une colle ci-dessus et de durcissement du produit fini.

Ces propriétés justifient également l'utilisation des colles et résines selon l'invention dans la fabrication de substrats imprégnables incluant les papiers ou cartons stratifiés et notamment les feuilles de papier décor ou les stratifiés décoratifs.

En effet, classiquement, la fabrication de stratifiés utilisant des résines thermodurcissables est réalisée par imprégnation d'un support papetier avec différentes résines, par exemple phénoliques ou à base de mélamine, puis séchage et découpe. Après le séchage et la découpe, les papiers enduits (préimprégnés) sont empilés et stockés. La phase de stratification permet, par empilement de ces feuilles et pression à chaud, de terminer la réaction des résines et ainsi d'avoir le produit final. Il existe aussi des procédés combinant, après imprégnation, séchage et stratification.

C'est pourquoi la présente demande a encore pour objet des papiers ou cartons stratifiés contenant une résine ou colle ci-dessus ou préparés en utilisant une résine ou colle ci-dessus, ainsi que les matériaux à base de bois revêtus de tels papiers ou cartons stratifiés, par pressage auto-adhésif sous pression ou par collage avec l'aide d'un adhésif, comme par exemple les panneaux de fibres, les panneaux de particules, les panneaux à fibres à densités moyenne et haute (Medium and High Density Fiberboards ou MDF), et d'autres types de panneaux similaires et contreplaqués.

La présente demande a autant pour objet des produits préparés à l'aide de tels papiers ou cartons stratifiés comme des plans de travail pour cuisine, salle de bains ou laboratoire, ou des revêtements de sol.

Les résines et colles ci-dessus décrites présentent également une bonne aptitude à la pulvérisation ainsi qu'une bonne diluabilité à l'eau et trouvent ainsi leur application dans la préparation de compositions d'encollage ou de liants pour produits à base de fibres minérales, comme des fibres de verre, destinées aux isolants thermiques ou acoustiques, ou pour des nappes de fibres de verre destinées au renforcement par exemple des produits pour toitures ou des matières plastiques.

Les liants qui contiennent généralement d'autres adjuvants tels que des silanes, des huiles minérales ou des composés azotés peuvent être appliqués suivant des procédés traditionnels sur les fibres, par exemple par pulvérisation. Ensuite, les fibres ainsi traitées sont habituellement soumises à un traitement thermique pour polycondenser la résine et obtenir un produit présentant des propriétés désirées telles que stabilité dimensionnelle, résistance à la traction, résistance à l'humidité.

C'est pourquoi la présente demande a encore pour objet un procédé pour l'encollage des fibres minérales dans lequel on encolle les fibres par un moyen classique comme la pulvérisation, à l'aide d'une résine ou colle ci-dessus.

Enfin, de manière générale, l'invention a pour objet l'utilisation d'un diacétal ci-dessus dans une colle ou résine ou pour la préparation ou la mise en oeuvre d'une colle ou résine.

A cet effet, on peut notamment mélanger ladite colle ou résine à des éléments à lier entre eux, ou déposer une couche de colle ou résine entre deux surfaces à coller entre elles. La présente invention ne vise par contre pas un revêtement de surface.

Les conditions préférentielles de mise en oeuvre des résines et colles ci-dessus décrites s'appliquent également aux autres objets de l'invention visés ci-dessus, notamment aux déchets agricoles et compositions de bois et aux papiers ou cartons stratifiés ainsi que leurs procédés de préparation.

Les exemples qui suivent illustrent la présente invention.

Dans la présente demande et dans ce qui suit, le terme "parties" signifie "parties en poids", "%" signifie "% en poids".

### EXEMPLE 1 : Préparation d'une colle de type aminoplaste

On a préparé une colle aminoplaste selon l'invention comme suit:

Dans un ballon équipé d'un réfrigérant, d'un thermomètre et d'un pH mètre on introduit 71 parties de formurée (concentré de formaldéhyde stabilisé avec de l'urée, contenant 54% de formaldéhyde et 23% d'urée) auquel on ajoute 8,2 parties d'urée et 19 parties d'eau. Le pH est porté à une valeur comprise entre 10 et 10,4 par addition de quelques gouttes d'une solution d'hydroxyde de sodium à 33%, et la température portée à 92 - 93°C sous agitation mécanique. Le pH diminue jusqu'à une valeur de 7,8 et la réaction continue à la même température jusqu'à ce que le pH chute à une valeur de 5,2 en 1 H 30 environ. On ajoute alors au mélange quelques gouttes de solution d'hydroxyde de sodium à 33% puis 40 parties de mélamine et 2 parties de diméthylformamide, en maintenant la température à 93°C. La tolérance à l'eau est testée toutes les 10 minutes et le pH chute de lui-même. Quand la tolérance à l'eau est de 180% - 200% (normalement après 35 - 40 minutes et à une valeur de pH de 7,2), 21,4 parties d'urée sont ajoutées et le pH est porté à 9,5. La réaction continue jusqu'à atteindre une tolérance à l'eau qui ne doit jamais être inférieure à 150% (le pH a une valeur de 7,7 à ce moment). Le pH est corrigé à une valeur de 9,5 et le mélange est refroidi et stocké. Une résine fabriquée selon cette procédure a un contenu solide de 58% à 65%, une densité de 1,260 à 1,280 à 20°C, une viscosité de 70 à 150 mPa.s, un temps de gel de 55 à 60 s à 100°C avec 3% de durcisseur (sulfate d'ammonium).

On ajoute à 100 parties de la colle Mélamine - Urée - Formaldéhyde ci-dessus, 5 parties de TME et 3 parties d'une solution à 50% de sulfate d'ammonium pour obtenir une colle selon l'invention.

Le test de tolérance à l'eau a été réalisé comme suit: On a placé 1 g de résine dans un tube à essais et ajouté de l'eau distillée jusqu'à ce que le mélange devienne blanc. La tolérance à l'eau TE a été donnée par application de la formule

$$TE = (masse\ d'eau\ /\ masse\ de\ résine) \times 100$$

### EXEMPLE 2 : Préparation d'une colle de type phénoplaste

On a préparé une colle phénoplaste (Phénol - formaldéhyde) selon l'invention comme suit:

Dans un ballon équipé d'un réfrigérant, d'un thermomètre, d'un pH mètre et d'un agitateur mécanique, on place 94 parties de phénol, 40 parties d'une solution méthanol/eau (20/80) et 55 parties de paraformaldéhyde à 96%. Après 30 minutes d'agitation mécanique à 40°C, la température est portée lentement jusqu'au reflux (94°C). 20 parties d'une solution d'hydroxyde de sodium à 33% sont ajoutées en 4 parties égales à 15 minutes d'intervalle. Le mélange est laissé au reflux pendant 30 à 60 minutes et refroidi dans un bain de glace. La couleur de la résine est jaune pâle et sa viscosité se situe entre 180 et 750 mPa.s, correspondant à un contenu solide de 58 à 60 %. On ajoute à 100 parties de la colle Phénol - formaldéhyde préparée ci-dessus, 10 parties de TME et 5 parties d'une solution à 99 % de triacétine pour obtenir une colle selon l'invention.

**Tests mécaniques**

**1) Analyse thermomécanique (TMA)**

On a assemblé deux plaquettes de bois de hêtre à l'aide de la colle à analyser.

**Protocole opératoire**

Le principe de cette méthode repose sur un système de modélisation du pressage de panneaux obtenu par l'assemblage de deux plaquettes au moyen de la colle à analyser, la qualité de l'assemblage obtenue étant directement liée à celle du mélange collant utilisé. Plus particulièrement, 30 mg de mélange collant sont déposés entre deux plaquettes de hêtre, et l'assemblage ainsi obtenu est disposé sur un support de telle sorte que ledit assemblage soit supporté par ses deux extrémités, et le tout est placé dans un four. Le four est soumis à un programme d'augmentation en température de 25 à 250°C, à raison de 10°C/min, ce qui conduit à un durcissement de la colle entre les deux plaquettes, et à la formation d'une seule plaquette de bois massif. Pendant la montée en température, une force est appliquée verticalement (F = 30 g) au milieu de la plaquette, cette force induisant une flexion (f) qui permet de déterminer le module d'élasticité. Cette flexion (f) diminue en fonction de la température, démontrant une augmentation de la résistance mécanique. L'appareil utilisé dans cette expérimentation est un analyseur thermomécanique "METTLER TMA 40", relié à un processeur et à un ordinateur permettant d'enregistrer les thermogrammes et de traiter les données obtenues. Plus particulièrement, et pour chaque échantillon testé, on a mesuré la déflexion (f en $\mu$m) en fonction de la température, et on a calculé le module d'élasticité (E en Mpa) selon l'équation:

$$E = [1/(f-3,2)] \times 47386$$

**Résultats**

Sur le tableau I ci-après sont réunis les résultats obtenus pour la colle aminoplaste de l'exemple 1.

TABLEAU I

| Adjuvant | Module d'élasticité maximal (moyenne corrigée) de la colle testée (Mpa) |
|---|---|
| Témoin = Colle aminoplaste de l'exemple 1 sans TME | 1 989 |
| Colle aminoplaste de l'exemple 1 | 2305 |

Sur le tableau II ci-après sont mentionnés les résultats obtenus pour la colle phénoplaste de l'exemple 2.

TABLEAU II

| Adjuvant | Module d'élasticité maximal (moyenne corrigée) de la colle testée (Mpa) |
|---|---|
| Témoin = Colle phénoplaste de l'exemple 2 sans TME | 3 729 |
| Colle phénoplaste de l'exemple 2 | 4 652 |

Les résultats figurant dans les tableaux I et II démontrent clairement l'effet du TME sur le module d'élasticité mesuré et, par conséquent, sur l'augmentation de la résistance mécanique obtenue.

**2) Mesure de résistance de la traction sur panneaux de particules**

**a) Préparation des panneaux**

A 1 000 g de bois sec ont été additionnées les quantités des divers constituants indiquées en grammes dans le Tableau III ci-après.

TABLEAU III

|  | N° d'échantillon | | | |
|---|---|---|---|---|
|  | 1 | 2 | 3 | 4 |
| Bois sec | 1 000 | 1 000 | 1 000 | 1 000 |
| Colle aminoplaste de l'exemple 1 sans TME | 100 | 100 | | |
| Colle aminoplaste de l'exemple 1 sans mélamine et sans TME | | | 100 | 100 |
| TME | | 10 | | 10 |

Les panneaux ont été pressés à une température de surface de 190°C, à une pression maximale de 28 Kg / cm² , avec un cycle de pressage de 3 minutes, pour une épaisseur finale de panneau de 14 mm (temps de pressage 12,8 sec/mm).

**b) Résultats**

Sur les panneaux ainsi obtenus, des mesures de résistance à la traction ont été effectuées, en utilisant la méthode décrite dans la norme européenne EN 319. Les résultats obtenus sont mentionnés sur le tableau IV ci-après.

TABLEAU IV

| N° d'échantillons | Résistance à la traction |
|---|---|
| Colle aminoplaste de l'exemple 1 sans TME | 0,858 |
| Colle aminoplaste de l'exemple 1 | 0,966 |
| Colle aminoplaste de l'exemple 1 sans mélamine et sans TME | 1,077 |
| Colle aminoplaste de l'exemple 1 sans mélamine | 1,227 |

Il ressort tout d'abord de ces résultats que, tous les autres paramètres étant identiques, la résistance à la traction obtenue est nettement améliorée pour les échantillons avec TME par rapport aux témoins (échantillons sans TME). L'addition de TME permet donc de diminuer la quantité de colle, tout en conservant une résistance à la traction comparable. La présente invention permet donc d'obtenir une diminution des coûts des panneaux fabriqués, et surtout une diminution des émissions de formaldéhyde, tant durant la production que durant le vieillissement des panneaux. En outre, la mélamine étant introduite dans les colles Urée - Formaldéhyde pour augmenter leur résistance mécanique, la présence de TME permet donc de diminuer la quantité de mélamine nécessaire pour une résistance mécanique équivalente, ce qui contribue également à une diminution du prix des colles et des panneaux fabriqués avec celles-ci. Enfin, il convient encore de relever que la présence de TME dans une colle aminoplaste ou phénoplaste augmente la compatibilité à l'eau de celle-ci. Après son élaboration, le degré de polymérisation d'une colle augmente avec le temps; la colle est alors dite plus "avancée", ce qui a pour conséquence d'augmenter la vitesse de réaction de ladite colle lors de son utilisation. Cependant, plus une colle est polymérisée plus sa compatibilité à l'eau et donc son aptitude à être diluée est faible. Le fait que la présence de TME dans une colle augmente sa compatibilité à l'eau a donc une double conséquence, à savoir d'une part pour un même degré de polymérisation, la compatibilité à l'eau est accrue et, d'autre part, pour une même compatibilité à l'eau, le degré de polymérisation, donc la vitesse de réaction lors de l'utilisation, peut être également augmenté.

**EXEMPLE 3. Préparation d'une colle de type aminoplaste sans formaldéhyde**

On a préparé une colle aminoplaste sans formaldéhyde selon l'invention comme suit :
Dans un réacteur équipé d'un réfrigérant, d'un thermomètre et d'un pH mètre, on introduit 126 parties de mélamine, 520 parties d'une solution aqueuse à 60 % de diméthoxyéthanal (DME) et 164 parties d'eau.

Le pH est porté à une valeur d'environ 5,8 par addition d'acide sulfurique à 20 %.

La réaction est maintenue à 95 °C pendant 3,5 heures sous agitation continue.

On ajoute alors 4,8 parties d'urée puis le mélange est refroidi lentement durant 2 heures jusqu'à température ambiante.

On ajoute alors à 67 mg de la colle aminoplaste sans formaldéhyde ci-dessus 5,1 mg de TME et 7,9 mg de $SO_4(NH_4)_2$ en solution aqueuse à 20 % pour obtenir une colle selon l'invention.

## EXEMPLE 4. Préparation d'une colle de type aminoplaste sans formaldéhyde

On opère comme à l'exemple 3, mais en remplaçant le TME par le 1,1,3,3-tétraméthoxypropane (TMP) (catalogue Acros).

## EXEMPLE 5. Préparation d'une colle de type aminoplaste sans formaldéhyde

On opère comme à l'exemple 3, mais en remplaçant le TME par le 1,1,3,3-tétraéthoxypropane (TEP) (catalogue Acros).

### Tests mécaniques

### Analyse thermomécanique (DMTA)

On a assemblé deux plaquettes de bois de hêtre à l'aide des différents échantillons de colle à analyser des exemples 3, 4 et 5 ainsi qu'avec les témoins ci-dessous :

TABLEAU V

| Echantillon | Colle aminoplaste sans formaldéhyde de l'exemple 3 (mg) | Durcisseur ($SO_4(NH_4)_2$) (solution aqueuse à 20 %) (mg) |
|---|---|---|
| 1 (témoin) | 80 | |
| 2 (témoin + durcisseur) | 75,2 | 4,8 |

### Protocole opératoire

40 mg de mélange collant sont déposés sur chaque plaquette de hêtre (38 x 8 x 0,5 mm) puis un sandwich de plaquettes de hêtre est formé par regroupement de 2 plaquettes, l'assemblage ainsi obtenu est disposé sur un support et le tout est placé dans un four.

Le four est soumis à un programme d'augmentation en température de 40 à 250 °C, à raison de 4 °C / minute. La force appliquée est de 0,3 N, la fréquence de 1 Hz et la déformation (Strain) de 0.

L'appareil utilisé dans cette expérimentation est un DMTA MkIII, Rheometric Scientific en flexion 3 points.

### Résultats

Sur le tableau VI ci-après sont réunis les résultats obtenus pour les échantillons indiqués.

TABLEAU VI

| Echantillon | Module d'élasticité maximum (Mpa) |
|---|---|
| 1 (témoin) | 4810 |
| 2 (témoin + durcisseur) | 4330 |
| Colle de l'exemple 3 | 5480 |
| Colle de l'exemple 4 | 6030 |
| Colle de l'exemple 5 | 5360 |

Les résultats figurant dans le tableau VI démontrent clairement l'effet des acétals sur le module d'élasticité mesuré, et par conséquent sur l'augmentation de la résistance mécanique obtenue.

### EXEMPLE 6. Préparation d'une colle de type phénoplaste

On a préparé une colle phénoplaste (Phénol - formaldéhyde) selon l'invention comme suit :

Dans un réacteur avec agitation magnétique et chauffage par bain d'huile, on incorpore 400 g de phénol à 92% et 22 g de potasse à 50%. Après avoir porté le mélange à 50 °C, on ajoute, goutte à goutte, 282 g de formaldéhyde à 50% puis on chauffe le mélange à 85 °C en environ 1 heure..A 85 °C, on démarre le palier de condensation et on stoppe la synthèse lorsque la diluabilité en masse (tolérance à l'eau) est de 40 g d'eau pour 10 g de résine. Enfin le mélange est refroidi à 50 °C en 30 minutes environ et on ajuste le pH autour de 7 à 20 °C par addition de HCl à 20%.

### a) Tests

### Evolution de la viscosité

Au moyen d'un viscosimètre Brookfield LV++ et en s'inspirant de la norme NF T76-102, on a mesuré l'influence de l'addition de TME sur la viscosité.

Pour ce faire, les mélanges ont été réalisés juste avant utilisation, dans les conditions opératoires suivantes :

- Mobile S00
- Vitesse 5 rpm
- Température 20°C

### Evolution de la tension de surface

On a mesuré l'influence de l'addition de TME sur la tension de surface selon la méthode décrite dans la norme ISO 4311 en utilisant une balance de Wilhelmy.

Les mélanges sont réalisés juste avant utilisation et en prenant la moyenne de 3 relevés pour chaque % de TME.

### Evolution de la diluabilité (tolérance à l'eau WT)

Elle est réalisée en déterminant la quantité d'eau requise pour produire une turbidité irréversible même après 30 secondes d'agitation du mélange eau / résine :

$$WT = \text{masse d'eau ajoutée / masse résine}$$

### Evolution de la pénétration papetière

On a mesuré l'influence de l'addition de TME sur la pénétration papetière selon la méthode décrite dans la norme NF Q03-069.

L'appareillage consiste en deux récipients reliés par un tuyau souple, l'un fixe, l'autre mobile, permettant d'assurer, lorsqu'on le déplace une pression d'eau donnée dans l'éprouvette fixée sur le premier récipient : cette pression d'eau permet d'obliger le liquide à traverser le papier, mais le temps que met la première goutte à traverser le papier est variable et fonction de la résistance du papier à la pénétration.

Un papier kraft de 180 g/m$^2$ est utilisé et on relève 2 valeurs pour chaque essai :

- Le temps qui est nécessaire pour apercevoir sur le papier une zone ronde complète, représentant le fait que toute la surface de contact résine / papier a été imprégnée,
- Le temps nécessaire pour avoir une goutte réellement formée en surface.

### Résultats

Les résultats obtenus sont mentionnés sur le tableau VII ci-après.

TABLEAU VII

| Echantillon | % TME | Viscosité (mPa.s) | Tension de surface (mJ.m$^{-2}$) | Diluabilité | Temps de formation du cercle (s) | Temps 1ère goutte (s) |
|---|---|---|---|---|---|---|
| 1 | 0 | 55 | 55,4 | 0,8 | 20 | 217 |
| 2 | 5 | 43 | 46,7 | 1,0 | 10 | 157 |
| 3 | 10 | 42 | 42,0 | 1,2 | 6 | 147 |
| 4 | 15 | - | 41,2 | - | - | - |
| 5 | 20 | 40 | 40,6 | 1,6 | - | - |
| 6 | 30 | 38 | 39,9 | - | 4 | 110 |

Il ressort de ces résultats que :

- L'addition de TME abaisse la viscosité, ce qui est un facteur intéressant pour faciliter la mise en oeuvre de la colle,
- L'addition de TME diminue rapidement la tension de surface de la résine PF et ceci très rapidement dès l'addition de quelques %, ce qui va influencer favorablement l'étalement de la colle sur le support (papier par exemple) mais aussi sa faculté à pénétrer dans les porosités et à s'y répartir de manière homogène,
- L'addition de TME augmente la diluabilité, ce qui indique une meilleure compatibilité entre la résine PF et l'eau ainsi qu'une meilleure stabilité,
- Les résultats obtenus sur la pénétration papetière sont en accord avec la diminution de la viscosité et de la tension de surface, facteurs favorisant l'imprégnation.

**Revendications**

1. Colle aminoplaste, phénoplaste ou résorcinol sans formaldéhyde à haute résistance mécanique, **caractérisée par le fait qu'**elle renferme un diacétal, linéaire ou cyclique, pouvant être préparé à partir d'aldéhydes en C$_2$ - C$_6$ et d'alcools en C$_1$ - C$_{12}$, ledit acétal étant ajouté à ladite colle.

2. Colle selon la revendication 1, **caractérisée en ce qu'**elle renferme un diacétal préparé à partir d'aldéhydes en C$_2$ - C$_4$ et d'alcools en C$_1$ - C$_8$.

3. Colle selon la revendication 1 ou 2, **caractérisée en ce qu'**elle renferme un diacétal préparé à partir d'aldéhydes en C$_2$ - C$_3$ et d'alcools en C$_1$ - C$_3$.

4. Colle selon l'une des revendications 1 à 3, **caractérisée en ce qu'**elle renferme le 1,1,2,2-tétraméthoxyéthane, le 1,1,2,2-tétraéthoxyéthane, le 1,1,2,2,-tétrapropoxyéthane, le 1,1,3,3-tétraméthoxypropane ou le 1,1,3,3-tétraéthoxypropane.

5. Colle selon l'une des revendications 1 à 4, **caractérisée en ce qu'**elle renferme le 1,1,2,2-tétraméthoxyéthane.

6. Colle selon l'une des revendications 1 à 5, **caractérisée en ce qu'**elle renferme une combinaison quelconque de deux ou trois diacétals.

7. Colle aminoplaste, phénoplaste ou résorcinol avec formaldéhyde, **caractérisée en ce qu'**elle renferme le 1,1,2,2-tétraméthoxyéthane.

8. Colle selon la revendication 7, **caractérisée en ce qu'**elle est une colle aminoplaste, particulièrement de type mélamine-urée-formaldéhyde.

9. Colle selon la revendication 7, **caractérisée en ce qu'**elle est une colle phénoplaste, particulièrement de type phénol-formaldéhyde.

10. Colle selon la revendication 8, **caractérisée en ce qu'**elle est fondée sur un mélange composé azoté / formaldéhyde dans les proportions de 1 / 0,2 à 3.

11. Colle selon la revendication 9 **caractérisée en ce qu'**elle est fondée sur un mélange phénol / formaldéhyde dans la proportion de 1 / 0,7 à 2,8.

12. Colle selon l'une des revendications 1 à 11, **caractérisée en ce que** le ou les acétals représentent pondéralement de 1,7 à 25 % de l'ensemble des constituants de la colle.

13. Un déchet agricole ou une composition de bois comme les panneaux de fibres, les panneaux de particules, les panneaux orientés de particules (Oriented Strand Boards ou OSB), les panneaux à fibres à densités moyenne et haute (Medium and High Density Fiberboards ou MDF), et d'autres types de panneaux similaires et contreplaqués contenant une colle telle que définie à l'une des revendications 1 à 12 ou préparés en utilisant une telle colle.

14. Un papier ou carton stratifié contenant une colle telle que définie à l'une des revendications 1 à 12 ou préparé en utilisant une colle ci-dessus, ou un produit préparé à l'aide de tels papiers ou cartons stratifiés.

15. Un procédé pour l'encollage de fibres dans lequel on encolle des fibres à l'aide d'une colle telle que définie à l'une des revendications 1 à 12.

16. Utilisation d'un diacétal, linéaire ou cyclique, pouvant être préparé à partir d'aldéhydes en $C_2$ - $C_6$ et d'alcools en $C_1$ - $C_{12}$ pour procurer à une colle une haute résistance, **caractérisée en ce que** l'on ajoute ledit diacétal à la composition de la colle et **en ce que** ladite colle est une colle aminoplaste, phénoplaste ou résorcinol sans formaldéhyde.

17. Utilisation selon la revendication 16, **caractérisée en ce que** le diacétal est préparé à partir d'aldéhydes en $C_2$-$C_4$ et d'alcools en $C_1$- $C_8$.

18. Utilisation selon les revendications 16 ou 17, **caractérisée en ce que** le diacétal est préparé à partir d'aldéhydes en $C_2$ - $C_3$ et d'alcools en $C_1$ - $C_3$.

19. Utilisation selon l'une des revendications 16 à 18, **caractérisée en ce que** le diacétal est le 1,1,2,2-tétraméthoxyéthane, le 1,1,2,2-tétraéthoxyéthane, le 1,1,2,2-tétrapropoxyéthane, le 1,1,3,3-tétraméthoxypropane ou le 1,1,3,3-tétraéthoxypropane.

20. Utilisation selon l'une des revendications 16 à 19, **caractérisée en ce que** le diacétal est le 1,1,2,2-tétraméthoxyéthane.

21. Utilisation selon l'une des revendications 16 à 20, **caractérisée en ce que** la colle renferme une combinaison quelconque de deux ou trois diacétals.

22. Utilisation du 1,1,2,2-tétraméthoxyéthane pour procurer à une colle une haute résistance, **caractérisée en ce que** l'on ajoute le 1,1,2,2-tétraméthoxyéthane à la composition de la colle et **en ce que** ladite colle est une colle aminoplaste, phénoplaste ou résorcinol avec formaldéhyde.

23. Utilisation selon la revendication 22, dans une colle aminoplaste, particulièrement de type mélamine-urée-formaldéhyde.

24. Utilisation selon la revendication 22, dans une colle phénoplaste, particulièrement de type phénol-formaldéhyde.

25. Utilisation selon la revendication 23, **caractérisée en ce que** la colle est fondée sur un mélange composé azoté / formaldéhyde dans les proportions de 1/0,2 à 3.

26. Utilisation selon la revendication 24, **caractérisée en ce que** la colle est fondée sur un mélange phénol / formaldéhyde dans les proportions de 1/0,7 à 2,8.

**EP 1 543 088 B1**

**Claims**

1. A formaldehyde-free, aminoresin, phenolic resin or resorcinol adhesive with high mechanical strength, **characterized in that** it contains a diacetal which is linear or cyclic, being able to be prepared from $C_2$-$C_6$ aldehydes and $C_1$-$C_{12}$ alcohols, said acetal being added to said adhesive.

2. An adhesive according to claim 1, **characterized in that** it contains a diacetal prepared from $C_2$-$C_4$ aldehydes and $C_1$-$C_8$ alcohols.

3. An adhesive according to claim 1 or 2, **characterized in that** it contains a diacetal prepared from $C_2$-$C_3$ aldehydes and $C_1$-$C_3$ alcohols.

4. An adhesive according to one of claims 1 to 3, **characterized in that** it contains 1,1,2,2-tetramethoxyethane, 1,1,2,2-tetraethoxyethane, 1,1,2,2,-tetrapropoxyethane, 1,1,3,3-tetramethoxypropane or 1,1,3,3-tetraethoxypropane.

5. An adhesive according to one of claims 1 to 4, **characterized in that** it contains 1,1,2,2-tetramethoxyethane.

6. An adhesive according to one of claims 1 to 5, **characterized in that** it contains any combination of two or three diacetals.

7. An aminoresin, phenolic resin or resorcinol adhesive with formaldehyde **characterized in that** it contains 1,1,2,2-tetramethoxyethane.

8. An adhesive according to claim 7, **characterized in that** it is an aminoresin adhesive, particularly of the melamine-urea-formaldehyde type.

9. An adhesive according to claim 7, **characterized in that** it is a phenolic resin adhesive, particularly of the phenol-formaldehyde type.

10. An adhesive according to claim 8, **characterized in that** it is based on a nitrogen compound/formaldehyde mixture in proportions of 1/0.2 to 3.

11. An adhesive according to claim 9, **characterized in that** it is based on a phenol/formaldehyde mixture in proportions of 1/0.7 to 2.8.

12. An adhesive according to one of claims 1 to 11, **characterized in that** the acetal or acetals represent 1.7 to 25% by weight of all of the constituents of the adhesive.

13. Agricultural waste or a wood composition such as fibreboards, particle boards, oriented strand boards (or OSB), Medium and High Density Fibreboards (or MDF), and other types of similar boards and plywoods containing an adhesive as defined in one of claims 1 to 12 or prepared using such an adhesive.

14. A paper or laminated board containing an adhesive as defined in one of claims 1 to 12 or prepared using an adhesive as above, or a product prepared using such papers or laminated boards.

15. A method for the gluing of fibres in which fibres are glued using an adhesive as defined in one of claims 1 to 12.

16. Use of a diacetal which is linear or cyclic, being able to be prepared from $C_2$-$C_6$ aldehydes and $C_1$-$C_{12}$ alcohols, for providing an adhesive with a high strength, **characterized in that** said diacetal is added to the adhesive composition and **in that** said adhesive is a formaldehyde-free, aminoresin, phenolic resin or resorcinol adhesive.

17. Use according to claim 16, **characterized in that** the diacetal is prepared from $C_2$-$C_4$ aldehydes and $C_1$-$C_8$ alcohols

18. Use according to claims 16 or 17, **characterized in that** the diacetal is prepared from $C_2$-$C_3$ aldehydes and $C_1$-$C_3$ alcohols.

19. Use according to one of claims 16 to 18, **characterized in that** the diacetal is 1,1,2,2-tetramethoxyethane, 1,1,2,2-tetraethoxyethane, 1,1,2,2,-tetrapropoxyethane, 1,1,3,3-tetramethoxypropane or 1,1,3,3-tetraethoxypropane.

20. Use according to one of claims 16 to 19, **characterized in that** the diacetal is 1,1,2,2-tetramethoxyethane.

21. Use according to one of claims 16 to 20, **characterized in that** the adhesive contains any combination of two or three diacetals.

22. Use of 1,1,2,2-tetramethoxyethane for providing an adhesive with a high strength, **characterized in that** 1,1,2,2-tetramethoxyethane is added to the adhesive composition and **in that** said adhesive is an aminoresin, phenolic resin or resorcinol adhesive with formaldehyde.

23. Use according to claim 22, in an aminoresin adhesive, particularly of the melamine-urea-formaldehyde type.

24. Use according to claim 22, in a phenolic resin adhesive, particularly of the phenol-formaldehyde type.

25. Use according to claim 23, **characterized in that** the adhesive is based on a nitrogen compound/formaldehyde mixture in proportions of 1/0.2 to 3.

26. Use according to claim 24, **characterized in that** the adhesive is based on a phenol/formaldehyde mixture in proportions of 1/0.7 to 2.8.

**Patentansprüche**

1. Aminoplast-, Phenoplast- oder Resorcin-Kleber ohne Formaldehyd mit hoher mechanischer Beständigkeit, **dadurch gekennzeichnet, dass** er ein lineares oder cyclisches Diacetal, das ausgehend von $C_2$-$C_6$-Aldehyden und $C_1$-$C_{12}$-Alkohlen hergestellt werden kann, umfasst, wobei das Acetal dem Kleber zugesetzt ist.

2. Kleber nach Anspruch 1, **dadurch gekennzeichnet, dass** er ein Diacetal umfasst, das ausgehend von $C_2$-$C_4$-Aldehyden und $C_1$-$C_8$-Alkoholen hergestellt wurde.

3. Kleber nach Anspruch 1 oder 2, **dadurch gekennzeichnet, dass** er ein Diacetal umfasst, das ausgehend von $C_2$-$C_3$-Aldehyden und $C_1$-$C_3$-Alkoholen hergestellt wurde.

4. Kleber nach einem der Ansprüche 1 bis 3, **dadurch gekennzeichnet, dass** er 1,1,2,2-Tetramethoxyethan, 1,1,2,2-Tetraethoxyethan, 1,1,2,2-Tetrapropoxyethan, 1,1,3,3-Tetramethoxypropan oder 1,1,3,3-Tetraethoxypropan umfasst.

5. Kleber nach einem der Ansprüche 1 bis 4, **dadurch gekennzeichnet, dass** er 1,1,2,2-Tetramethoxyethan umfasst.

6. Kleber nach einem der Ansprüche 1 bis 5, **dadurch gekennzeichnet, dass** er eine beliebige Kombination aus zwei oder drei Diacetalen umfasst.

7. Aminoplast-, Phenoplast- oder Resorcin-Kleber mit Formaldehyd, **dadurch gekennzeichnet, dass** er 1,1,2,2-Tetramethoxyethan umfasst.

8. Kleber nach Anspruch 7, **dadurch gekennzeichnet, dass** er ein Aminoplast-Kleber, insbesondere vom Melamin-HarnstofF-Formaldehyd-Typ ist.

9. Kleber nach Anspruch 7, **dadurch gekennzeichnet, dass** er ein Phenoplast-Kleber, insbesondere vom Phenol-Formaldehyd-Typ ist.

10. Kleber nach Anspruch 8, **dadurch gekennzeichnet, dass** er auf einem Gemisch stickstoffhaltige Verbindung/Formaldehyd in den Verhältnissen von 1/0,2 bis 3 basiert.

11. Kleber nach Anspruch 9, **dadurch gekennzeichnet, dass** er auf einem Gemisch Phenol/Formaldehyd im Verhältnis von 1/0,7 bis 2,8 basiert.

12. Kleber nach einem der Ansprüche 1 bis 11, **dadurch gekennzeichnet, dass** das Acetal oder die Acetale auf das Gewicht bezogen 1,7 bis 25 % der Gesamtheit der Bestandteile des Klebers ausmacht/ausmachen.

**13.** Landwirtschaftlicher Abfall oder Holzmasse, wie Faserplatten, Spanplatten, orientierte Spanplatten (Oriented Strand Boards oder OSB), Faserplatten mit mittlerer Dichte und hoher Dichte (Medium und High Density Fiberboards oder MDF) und andere Typen ähnlicher Platten und Sperrholzplatten, enthaltend einen Kleber wie in einem der Ansprüche 1 bis 12 definiert oder hergestellt unter Verwendung eines solchen Klebers.

**14.** Papier oder kaschierter bzw. laminierter Karton, enthaltend einen Kleber wie er in einem der Ansprüche 1 bis 12 hergestellt ist, oder hergestellt unter Verwendung eines obigen Klebers, oder ein Produkt, hergestellt mit Hilfe solcher Papiere oder laminierter bzw. kaschierter Kartons.

**15.** Verfahren zum Leimen von Fasern, indem man Fasern mit Hilfe eines Klebers, wie er in einem der Ansprüche 1 bis 12 definiert ist, leimt.

**16.** Verwendung eines linearen oder cyclischen Diacetals, das ausgehend von $C_2$-$C_6$-Aldehyden und $C_1$-$C_{12}$-Alkoholen hergestellt werden kann, um einem Kleber hohe Beständigkeit zu verleihen, **dadurch gekennzeichnet, dass** man das Diacetal zu der Zusammensetzung des Klebers gibt und dass der Kleber ein Aminoplast-, Phenoplast- oder Resorcin-Kleber ohne Formaldehyd ist.

**17.** Verwendung nach Anspruch 16, **dadurch gekennzeichnet, dass** das Diacetal ausgehend von $C_2$-$C_4$-Aldehyden und $C_1$-$C_8$-Alkoholen hergestellt ist.

**18.** Verwendung nach Anspruch 16 oder 17, **dadurch gekennzeichnet, dass** das Diacetal ausgehend von $C_2$-$C_3$-Aldehyden und $C_1$-$C_3$-Alkoholen hergestellt ist.

**19.** Verwendung nach einem der Ansprüche 16 bis 18, **dadurch gekennzeichnet, dass** das Diacetal 1,1,2,2-Tetramethoxyethan, 1,1,2,2-Tetraethoxyethan, 1,1,2,2-Tetrapropoxyethan, 1,1,3,3-Tetramethoxypropan oder 1,1,3,3-Tetraethoxypropan ist.

**20.** Verwendung nach einem der Ansprüche 16 bis 19, **dadurch gekennzeichnet, dass** das Diacetal 1,1,2,2-Tetramethoxyethan ist.

**21.** Verwendung nach einem der Ansprüche 16 bis 20, **dadurch gekennzeichnet, dass** der Kleber eine beliebige Kombination aus zwei oder drei Diacetalen umfasst.

**22.** Verwendung von 1,1,2,2-Tetramethoxyethan, um einem Kleber hohe Beständigkeit zu verleihen, **dadurch gekennzeichnet, dass** man das 1,1,2,2-Tetramethoxyethan zu der Zusammensetzung des Klebers gibt und dass der Kleber ein Aminoplast-, Phenoplast- oder Resorcin-Kleber mit Formaldehyd ist.

**23.** Verwendung nach Anspruch 22 in einem Aminoplast-Kleber, insbesondere des Melamin-Harnstoff-Formaldehyd-Typ.

**24.** Verwendung nach Anspruch 22 in einem Phenoplast-Kleber, insbesondere des Phenol-Formaldehyd-Typs.

**25.** Verwendung nach Anspruch 23, **dadurch gekennzeichnet, dass** der Kleber auf einem Gemisch stickstoffhaltige Verbindung/Formaldehyd in den Verhältnissen 1/0,2 bis 3 basiert.

**26.** Verwendung nach Anspruch 24, **dadurch gekennzeichnet, dass** der Kleber auf einem Gemisch Phenol/Formaldehyd in den Verhältnissen 1/0,7 bis 2,8 basiert.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1174480 A
- FR 1576716 A
- WO 9700172 A

- WO 0145940 A
- EP 1225278 A
- EP 406498 A